(19) Europäisches Patentamt
European Patent Office
Office européen des brevets

(11) EP 1 050 560 A1

(12) EUROPÄISCHE PATENTANMELDUNG

(43) Veröffentlichungstag:
**08.11.2000 Patentblatt 2000/45**

(51) Int. Cl.[7]: **C08L 75/04**

(21) Anmeldenummer: **00109075.2**

(22) Anmeldetag: **02.05.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **06.05.1999 DE 19920977**

(71) Anmelder:
**BASF AKTIENGESELLSCHAFT**
**67056 Ludwigshafen (DE)**

(72) Erfinder:
- **Niessner, Norbert, Dr.**
**67159 Friedelsheim (DE)**
- **Gottschalk, Axel, Dr.**
**67435 Neustadt (DE)**
- **Scholz, Günter, Dr.**
**49448 Lemförde (DE)**
- **Brüning, Ines, Dr.**
**49356 Diepholz (DE)**

(74) Vertreter:
**Isenbruck, Günter, Dr. et al**
**Patent- und Rechtsanwälte,**
**Bardehle-Pagenberg-Dost-Altenburg-Geissler-Isenbruck**
**Theodor-Heuss-Anlage 12**
**68165 Mannheim (DE)**

(54) **Durch Copolymer schlagzähmodifiziertes Polykondensat**

(57) Die Erfindung betrifft eine Mischung, mindestens enthaltend als Bestandteile

A ein Polykondensat oder Polyadditionsprodukt, vorzugsweise ein Polyurethan,
B mindestens ein erstes Copolymer

B1, erhältlich aus mindestens

B11 einem substituierten vinylaromatischen Monomer,
B12 einem Acrylmonomer,

und ein zweites Copolymer

B2, erhältlich aus mindestens

B21 einem vinylaromatischen Monomer,
B22 einem Acrylmonomer,

wobei erstes und zweites Copolymer verschieden voneinander sind,

sowie ein Verfahren zur Herstellung dieser Mischung, Gebilde, die diese Mischung beinhalten als auch die Verwendung dieser Mischung für Gebilde.

EP 1 050 560 A1

## Beschreibung

Die Erfindung betrifft sowohl eine Mischung aus einem Polykondensat oder Polyadditionsprodukt und einem Copolymer, ein Verfahren zur Herstellung dieser Mischung sowie Gebilde, die diese Mischung beinhalten, als auch die Verwendung dieser Mischung für Gebilde.

DE 28 54 407 A1 offenbart einen thermoplastischen Chemiewerkstoff, bestehend aus (A) einem thermoplastischen Polyurethan und (B) einem Pfropfcopolymer aus olefinisch ungesättigten Monomeren. Dieser thermoplastische Chemiewerkstoff, bestehend aus einem Polyurethan, das durch das olefinische Pfropfcopolymer schlagzähmodifiziert wurde, weist eine unbefriedigende Kerbschlagzähigkeit im Bereich von 18 bis 27 $kJ/m^2$ auf.

Der Erfindung lag daher die Aufgabe zugrunde, die Materialeigenschaften, insbesondere die Kerbschlagzähigkeit, von Polykondensaten und Polyadditionsprodukten zu verbessern.

Diese Aufgabe wurde durch eine Mischung, mindestens beinhaltend als Bestandteile,

A ein Polykondensat oder Polyadditionsprodukt, vorzugsweise ein Polyurethan,
B mindestens ein erstes Copolymer

B1, erhältlich aus mindestens

B11 einem am aromatischen Rest substituierten vinylaromatischen Monomer,
B12 einem Acrylmonomer,

und ein zweites Copolymer

B2, erhältlich aus mindestens

B21 einem vinylaromatischen Monomer,
B22 einem Acrylmonomer, wobei erstes und zweites Copolymer verschieden voneinander sind, gelöst.

Erfindungsgemäß werden unter Polykondensaten oder Polyadditionsprodukten alle dem Fachmann bekannten durch Polykondensations- oder Polyadditionsreaktionen erhältlichen Polymere verstanden. Unter diesen sind Polyester, Polyamide, Polyurethane, Polysiloxane, Polysulfone, Polyether, Polysulfide, Polyimide, Polyimidazole, Polyoxaole, Polythiazole, Polydiazole, Polyimidazopyrrolone sowie durch 1,3-dipolare Addition erhaltene Polymere, inbesondere Polyurethane, in Form ihrer Homo- oder Copolymere zu erwähnen. Im Zusammenhang mit den dem Fachmann allgemein bekannten Herstellungsverfahren und Eigenschaften der vorgenannten Polymeren wird auf „Principals of Polymerisation", 2nd Ed., George Odian, 1981, John Whiley and Sons, Inc., Seite 46 bis Seite 165 verwiesen.

Die erfindungsgemäß besonders bevorzugten Polyurethane, auch TPU genannt, werden nach an sich bekannten Verfahren durch die Umsetzung von (a) Isocyanaten mit (b) gegenüber Isocyanaten reaktiven Verbindungen und gegebenenfalls (c) Kettenverlängerungsmitteln in Gegenwart von gegebenenfalls (d) Katalysatoren und/oder (e) Hilfs- und/oder Zusatzstoffen hergestellt, wobei vorzugsweise das Verhältnis der Isocyanatgruppen der Komponenten (a) zur Summe der gegenüber den Isocyanaten reaktiven Gruppen der Komponenten (b) und gegebenenfalls (c) üblicherweise 1:0,9 bis 1:1,1 beträgt.

Nachfolgend werden die Isocyanate (a), die gegenüber Isocyanaten reaktiven Verbindungen (b), die Kettenverlängerungsmittel (c), die Katalysatoren (d) sowie die Hilfs- und/oder Zusatzstoffe (e) beispielhaft ausgeführt:

a) Als Isocyanate (a) kommen vorzugsweise aliphatische, cycloaliphatische und insbesondere aromatische Diisocyanate in Betracht. Im einzelnen seien beispielhaft genannt: aliphatische Diisocyanate, wie Hexamethylen-diisocyanat-1,6, 2-Methyl-pentamethylen-diisocyanat-1,5, 2-Ethyl-butylen-diisocyanat-1,4 oder Mischungen aus mindestens 2 der genannten $C_6$-Alkylen-diisocyanate, Pentamethylen-diisocyanat-1,5 und Butylen-diisocyanat-1,4, cycloaliphatische Diisocyanate, wie 1-Isocyanato-3,3,5-trimethyl-5-isocyanatomethyl-cyclohexan (Isophoron-diisocyanat), 1,4- und/oder 1,3-Bis(isocyanatomethyl)cyclohexan (HXDI), 1,4-Cyclohexan-diisocyanat, 1-Methyl-2,4- und -2,6-cyclohexan-diisocyanat sowie die entsprechenden Isomerengemische, 4,4'-, 2,4'- und 2,2'-Dicyclohexylmethan-diisocyanat sowie die entsprechenden Isomerengemische und vorzugsweise aromatische Diisocyanate, wie 2,4-Toluylen-diisocyanat, Gemische aus 2,4- und 2,6-Toluylen-diisocyanat, 3,3'-Dimethyl-4,4'-biphenyldiisocyanat (TODI), p-Phenylendiisocyanat (PDI), m-, p-Xylylendiisocyanat (XDI), 4,4'-, 2,4'- und 2,2'-Diphenylmethan-diisocyanat (MDI), Gemische aus 2,4'- und 4,4'-Diphenylmethan-diisocyanat, urethanmodifizierte flüssige 4,4'- und/oder 2,4-Diphenylmethan-diisocyanate, 4,4'-Diisocyanato-diphenylethan- (1,2) (EDI) und 1,5-Naphthylen-diisocyanat. Vorzugsweise verwendet werden 1,5-Naphthylen-diisocyanat, 4,4'-Bicyclohexyl-methan-diisocyanat, Hexamethylen-diisocyanat-1,6, Diphenylmethan-diisocyanat-Isomerengemische mit einem 4,4'-Diphenylmethan-diisocyanatgehalt von größer als 96 Gew.-% und insbesondere 4,4'-Diphenylmethan-diisocyanat und Hexamethylen-diisocyanat-1,6.

b) Als gegenüber Isocyanaten reaktive Substanzen (b) eignen sich beispielsweise Polyhydroxylverbindungen mit Molekulargewichten von 500 bis 8000, vorzugsweise bekannte Polyetherole und/oder Polyesterole. In Betracht kommen jedoch auch hydroxylgruppenhaltige Polymere, beispielsweise Polyacetale, wie Polyoxymethylene und vor allem wasserunlösliche Formale, z.B. Polybutandiolformal und Polyhexandiolformal, und aliphatische Polycarbonate, insbesondere solche, aus Diphenylcarbonat und Hexandiol-1,6, hergestellt durch Umesterung, mit den oben genannten Molekulargewichten. Die genannten Polyhydroxylverbindungen können als Einzelkomponenten oder in Form von Mischungen zur Anwendung kommen.

Die Mischungen zur Herstellung der TPU bzw. die TPU basieren üblicherweise zumindest überwiegend auf difunktionellen gegenüber Isocyanaten reaktiven Substanzen, d.h. die mittlere Funktionalität der Komponente (d) beträgt vorzugsweise 1,8 bis 2,6, besonders bevorzugt 1,9 bis 2,2. Die TPU sind somit vorwiegend unverzweigt, d.h. überwiegend nicht vernetzt, aufgebaut.

Vorzugsweise verwendet werden Polyetherole auf der Basis von Propylenoxid-1,2 und Ethylenoxid, in denen mehr als 50 %, vorzugsweise 60 bis 100 % der OH-Gruppen primäre Hydroxylgruppen sind und bei denen zumindest ein Teil des Ethylenoxids als endständiger Block angeordnet ist und insbesondere Polyoxytetramethylen-glykole (Polytetrahydrofuran).

Die im Falle der TPU im wesentlichen linearen Polyetherole besitzen üblicherweise Molekulargewichte von 500 bis 8000, vorzugsweise 600 bis 6000 und insbesondere 800 bis 3500. Sie können sowohl einzeln als auch in Form von Mischungen untereinander zur Anwendung kommen.

Geeignete Polyesterole können beispielsweise aus üblichen Dicarbonsäuren mit 2 bis 12 Kohlenstoffatomen, vorzugsweise 4 bis 8 Kohlenstoffatomen, beispielsweise Bernsteinsäure, Glutarsäure, Korksäure, Azelainsäure, Sebacinsäure, Adipinsäure, Phthalsäure, Isophthalsäure und/oder Terephthalsäure und bekannten mehrwertigen Alkoholen, beipielsweise Ethandiol, Propandiol-1,3, Butandiol-1,4, Pentandiol-1,5, Hexandiol-1,6, Decandiol-1,10, 2,2-Dimethylpropandiol-1,3, Propandiol-1,2, Diethylenglykol und/oder Dipropylenglykol hergestellt werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise (ω-Hydroxy-capronsäure und vorzugsweise Polymerisationsprodukte von Lactonen, beispielsweise gegebenenfalls substituierten ω-Caprolactonen.

Als Polyesterole vorzugsweise verwendet werden Alkandiol-polyadipate mit 2 bis 6 Kohlenstoffatomen im Alkylenrest, wie z.B. Ethandiol-polyadipate, 1,4-Butandiol-polyadipate, Ethandiol-butandiol-1,4-polyadipate, 1,6-Hexandiol-neopentylglykol-polyadipate, Polycaprolactone und insbesondere 1,6-Hexandiol-1,4-butandiol-polyadipate.

Die Polyesterole besitzen vorzugsweise Molekulargewichte (Gewichtsmittel) von 500 bis 6000, besonders bevorzugt von 800 bis 3500.

c) Als Kettenverlängerungsmittel (c), die üblicherweise Molekulargewichte von 60 bis 499, vorzugsweise 60 bis 300 aufweisen, kommen vorzugsweise Alkandiole mit 2 bis 12 Kohlenstoffatomen, vorzugsweise mit 2, 4 oder 6 Kohlenstoffatomen, wie z.B. Ethandiol, Hexandiol-1,6, und insbesondere Butandiol-1,4 und Dialkylen-etherglykole wie z.B. Diethylenglykol und Dipropylenglykol in Betracht. Geeignet sind jedoch auch Diester der Terephthalsäure mit Alkandiolen mit 2 bis 4 Kohlenstoffatomen, z.B. Terephthalsäure-bis-ethandiol oder -butandiol-1,4, Hydroxyalkylenether des Hydrochinons, wie z.B. 1,4-Di-(β-hydroxyethyl)-hydrochinon, (cyclo) aliphatische Diamine, wie z.B. 4,4'-Diamin-odicyclohexylmethan, 3,3'-Dimethyl-4,4'-diaminodicyclohexylmethan, 1-Amino-3,3,5-trimethyl-5-aminomethyl-cyclohexan, Ethylendiamin, 1,2- oder 1,3-Propylen-diamin, N-Methyl-propylendiamin-1,3, N,N'-Dimethylethylendiamin und aromatische Diamine, wie z.B. 2,4- und 2,6-Toluylen-diamin, 3,5-Diethyl-2,4- und -2,6-toluylendiamin und primäre, ortho-di-, -tri- und/oder - tetraalkylsubstituierte 4,4'-Diamino-diphenylmethane.

Als Kettenverlängerungsmittel finden vorzugsweise Verwendung Alkandiole mit 2 bis 6 Kohlenstoffatomen im Alkylenrest, insbesondere Butandiol-1,4 und/oder Dialkylenglykole mit 4 bis 8 Kohlenstoffatomen.

Zur Einstellung der üblichen Härte der TPUs und der Schmelzpunkte der TPUs werden die Aufbaukomponenten (b) und (c) üblicherweise in einem molaren Verhältnis (b):(c) von 1:0,8 bis 1:10, bevorzugt 1:1 bis 1:6,4 variiert, wobei die Härte und der Schmelzpunkt der TPU mit zunehmendem Gehalt an Diolen ansteigt.

Bevorzugt werden TPU auf der Basis von: (a) 4,4'-Diphenylmethandiisocyanat (MDI), und/oder Hexamethylendiisocyanat, (b) Polyoxytetramethylenglykol, Polyetherole auf Basis Propylenoxid-1,2 und Ethylenoxid und/oder Polyesterole auf Basis Alkan-diolpolyadipat mit 2 bis 6 Kohlenstoffatomen im Alkylenrest sowie (c) Ethandiol-1,2, Butandiol-1,4, Ethandiol und/oder Hexandiol-1,6 eingesetzt, wobei das Verhältnis der Isocyanatgruppen der Komponente (a) zur Summe der gegenüber den Isocyanaten reaktiven Gruppen der Komponenten (b) und (c) bevorzugt 1:0,9 bis 1:1,1 beträgt und (b) und (c) besonders bevorzugt in einem molaren Verhältnis von (b):(c) von 1:1 bis 1:6,4 eingesetzt werden.

d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metall-verbindungen wie Titansäureester, Eisenverbindungen wie z.B. Eisen-(III)-acetyl-acetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutyl-zinndilaurat oder ähnliche. Die Katalysatoren werden üblicherweise in Mengen von 0,002 bis 0,1 Teilen pro 100 Teile Polyhydroxylverbindung (b) eingesetzt.

e) Neben Katalysatoren können den Aufbaukomponenten auch übliche Hilfsmittel und/oder Zusatzstoffe (e) hinzugefügt werden. Genannt seien beispielsweise oberflächenaktive Substanzen, Füllstoffe, Flammschutzmittel, Keimbildungsmittel, Oxidationsverzögerer, Stabilisatoren, Gleit- und Entformungshilfen, Farbstoffe und Pigmente, Inhibitoren, Stabilisatoren gegen Hydrolyse, Licht, Hitze oder Verfärbung, Farbstoffe, anorganische und/oder organische Füllstoffe, Verstärkungsmittel und Weichmacher.

Nähere Angaben über die oben genannten Hilfsmittel- und Zusatzstoffe sind der Fachliteratur zu entnehmen.

Die Herstellung der TPUs aus beispielsweise den beschriebenen Ausgangskomponenten ist allgemein bekannt und vielfach beschrieben. Zum Beispiel kann das Reaktionsgemisch enthaltend (a), (b) und gegebenenfalls (c), (d) und/oder (e) nach den bekannten one-shot- oder nach dem Prepolymerverfahren umgesetzt werden, beispielsweise in einem Reaktionsextruder und/oder auf einer üblichen Bandanlage. Die derart hergestellten TPUs können anschließend pelletiert oder granuliert werden und mit der Komponente B zu den erfindungsgemäßen, bevorzugt homogenen Mischungen verarbeitet werden.

Ein erfindungsgemäßes substituiertes vinylaromatisches Monomer besitzt vorzugsweise 8 bis 50, bevorzugt 8 bis 20 und besonders bevorzugt 8 bis 10 Kohlenstoffatome, wobei mindestens einer der beiden die Vinylfunktionalität bildenden Kohlenstoffe, vorzugsweise der α-Kohlenstoff, einen $C_1$- bis $C_{10}$-, bevorzugt $C_1$- bis $C_5$- und besonders bevorzugt $C_1$- bis $C_3$-Rest trägt. Als derartiger Rest ist Methyl, Ethyl, 1-Propyl, 2-Propyl bevorzugt und Methyl besonders bevorzugt. Erfindungsgemäß besonders bevorzugte substituierte vinylaromatische Monomere sind α-Methylstyrol, α-Ethylstyrol oder α-Propylstyrol, wobei α-Methylstyrol besonders bevorzugt ist. Die zuvor genannten bevorzugten vinylaromatischen Monomere können sowohl einzeln oder als Kombination von mindestens zweien in dem Copolymer B1 für B11 eingesetzt werden.

Eine weitere Gruppe der erfindungsgemäß als Monomer B1 einsetzbaren substituierten vinylaromatischen Monomere ergeben sich aus der nachstehend aufgeführten Formel I

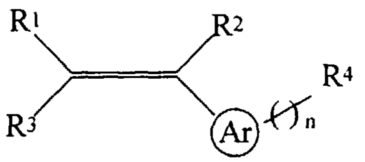

(I)

mit Ar $C_6$- bis $C_{12}$-, bevorzugt $C_6$- bis $C_{10}$- und besonders bevorzugt $C_6$- bis $C_8$-Aryl, insbesondere Phenyl, Naphthyl und besonders bevorzugt Phenyl,

$R^1$, $R^2$ und $R^3$ unabhängig voneinander Wasserstoff, $C_1$- bis $C_{20}$-, bevorzugt $C_1$-bis $C_{10}$- und besonders bevorzugt $C_1$- bis $C_6$-Alkyl, insbesondere Methyl, Ethyl, 1-Propyl, 2-Propyl, 1-Butyl, 2-Butyl, tert.-Butyl, 1-Pentyl, 2-Pentyl, 3-Pentyl, Cyclopentyl, 1-Hexyl, 2-Hexyl, 3-Hexyl und Cyclohexyl, insbesondere Methyl, Ethyl, 1-Propyl, tert.-Butyl und besonders bevorzugt Methyl,

$R^4$ $C_1$- bis $C_{20}$-, bevorzugt $C_1$- bis $C_{10}$- und besonders bevorzugt $C_1$- bis $C_6$-Alkyl, insbesondere Methyl, Ethyl, 1-Propyl, 2-Propyl, 1-Butyl, 2-Butyl, tert.-Butyl, 1-Pentyl, 2-Pentyl, 3-Pentyl, Cyclopentyl, 1-Hexyl, 2-Hexyl, 3-Hexyl und Cyclohexyl, bevorzugt Methyl und tert.-Butyl,

n als ganzzahlige Variable von 1 bis zur Anzahl der das aromatische System des Arylrest bildenden Kohlenstoffe - 1, vorzugsweise 1, 2, 3 und besonders bevorzugt 1.

Falls die ganzzahlige Variable n 1 bedeutet und Ar für einen Phenylrest steht, ist es bevorzugt, daß der Rest $R^4$ in Parastellung zu der am Phenylrest gebundenen Vinylgruppe des vinylaromatischen Monomers steht.

In einer Ausführungsform sind unter die Formel I fallende Styrole wie p-Methylstyrol oder p-tert.-Butylstyrol bevorzugt.

Erfindungsgemäß können als vinylaromatisches Monomer B11 sowohl die zuvor genannten Monomere einzeln oder als Kombination von mindestens zwei eingesetzt werden.

Erfindungsgemäß sind Acrylmonomere B12 mit 3 bis 20, bevorzugt 3 bis 10 und besonders bevorzugt 3 bis 6 Kohlenstoffatomen besonders geeignet. Unter diesen wiederum sind Acrylnitril, Methacrylnitril, Acrylsäure, (Meth)-acrylsäurealkylester mit 1 bis 4, bevorzugt 1 bis 3 und besonders bevorzugt 1 oder 2 Kohlenstoffatomen im Alkylrest, Maleinsäureanhydrid, Phenylmaleinimid, Acrylamid oder Vinylmethylether bevorzugt. Besonders bevorzugt sind gegebenenfalls substituierte Acrylnitrile, insbesondere Acrylnitril oder Methacrylnitril.

Das erste Copolymer B1 kann weiterhin aus zusätzlichen Monomeren B13 gebildet werden, sofern diese zusätzlichen Monomeren nicht bereits als Monomere B12 eingesetzt werden. Hierbei kommen alle dem Fachmann bekannten, eine Doppelbindung aufweisenden Monomere in Betracht. Als Monomere B13 besonders bevorzugt sind Acrylsäure, Methacrylsäure, Maleinsäureanhydrid, Methacrylnitril, Methacrylat, Ethylacrylat, Propylacrylat, Methylmethacrylat, Ethylmethacrylat, Phenylmaleinimid und Acrylamid.

Im zweiten Copolymer B2 können als vinylaromatische Monomere B21 die bereits unter B11 aufgeführten Monomere und auch unsubstituierte vinylaromatische Monomere, vorzugsweise Styrol, eingesetzt werden. Es ist bevorzugt, daß als Monomer B21 unsubstituierte vinylaromatische Monomere eingesetzt werden.

Als Monomere B22 im zweiten Copolymer B2 können die unter B12 angegebenen Acrylmonomere eingesetzt werden.

Weiterhin ist eine Mischung erfindungsgemäß bevorzugt, bei der Bestandteil B mindestens ein drittes Copolymer B3 aufweist. Das dritte Copolymer B3 ist erhältlich aus mindestens

B31 als einer Komponente, mindestens enthaltend

B311 ein Acrylat,
B312 einen Vernetzer,
oder

B3111 ein Dien,
B3112 gegebenenfalls einen Vernetzer, und

B32 als eine weitere Komponente, mindestens enthaltend

B321 ein vinylaromatisches Monomer,
B322 ein Acrylmonomer.

In einer bevorzugten Ausführungsform der erfindungsgemäßen Mischung ist das Dien B3111 zusammen mit mindestens einem Vernetzer B3112 enthalten.

Als Vernetzer B312 oder B3112 können unabhängig voneinander alle dem Fachmann bekannten und mit Rücksicht auf die anderen eingesetzten Monomere geeigneten Vernetzer, insbesondere die in dieser Anmeldung beschriebenen, eingesetzt werden.

Als Monomere B311 kommen vorzugsweise Acrylsäurealkylester in Betracht. Hierbei ist es bevorzugt, daß Alkylesterreste mit 1 bis 8, bevorzugt 4 bis 8 Kohlenstoffatomen eingesetzt werden. Unter diesen ist wiederum der n-Butyl- oder Ethylhexyl-Rest besonders bevorzugt. Somit haben sich erfindungsgemäß als Monomer B311 Acrylsäure-n-butylester oder Acrylsäureethylhexylester besonders bewährt. Die zuvor genannten Monomere B311 können sowohl für sich als auch in Kombination von mindestens zweien eingesetzt werden.

Als Vernetzer B312 haben sich mindestens bifunktionelle, bevorzugt 2 bis 3-funktionelle Vernetzer mit 4 bis 40, bevorzugt 4 bis 20 und besonders bevorzugt 4 bis 10 Kohlenstoffatomen besonders bewährt. Als funktionelle Gruppen sind ethylenische Doppelbindungen bevorzugt, die nicht zur Polymerisation mit den weiteren eingesetzten Vernetzern in der Lage sind. Besonders bevorzugt ist es, daß die die funktionellen Gruppen darstellenden ethylenischen Doppelbindungen nicht miteinander konjugiert sind und besonders bevorzugt nicht miteinander in 1,3-Stellung konjugiert sind. Erfindungsgemäß besonders geeignete Vernetzermonomere B312 sind beispielsweise Divinylbenzol, Diallylmaleat, Diallylfumarat, Diallylphthalat, Acrylsäureester des Tricyclodecenyl-alkohols oder Tricyclopentadienylacrylat, wobei die beiden letztgenannten Vernetzer besonders bevorzugt sind. In der einen Komponente B31 des Copolymers B3 können noch weitere mit den Monomeren B311 oder dem Vernetzer B312 copolymerisierbare Monomere B313 eingesetzt werden. Geeignete Monomere B313 sind alle dem Fachmann bekannten entweder radikalisch, anionisch oder kationisch polymerisierbaren Monomere, insbesondere Styrol, $\alpha$-Methylstyrol, Acrylnitril, Methacrylnitril, Methylacrylat, Ethylacrylat, Propylacrylat, Methylmethacrylat, Ethylmethacrylat, Phenylmaleinimid, Acrylamid oder Vinylmethylether

oder mindestens zwei davon.

Alternativ können in dem Copolymer B3 als Komponente B31 $C_4$- bis $C_{40}$-, bevorzugt $C_4$- bis $C_{20}$- und besonders bevorzugt $C_4$- bis $C_{10}$-konjugierte Diene eingesetzt werden. Unter diesen haben sich Butadien und Isopren und besonders bevorzugt Butadien bewährt.

Bezüglich der Monomere B321 und B322, die in der weiteren Komponente B32 eingesetzt werden können, wird auf die Definitionen für B21 und B22 verwiesen.

Weiterhin ist es bei der erfindungsgemäßen Mischung bevorzugt, daß entweder das Copolymer B1 oder das Copolymer B2 oder beide Copolymere keine Pfropfcopolymere sind. Es ist besonders bevorzugt, daß die Copolymere B1 oder B2 oder beide Blockcopolymere oder statistische Copolymere, vorzugsweise statistische Copolymere sind.

Unter Pfropfcopolymeren werden erfindungsgemäß Copolymere verstanden, die eine Kern-Schale-Morphologie aufweisen. Vorzugsweise wird diese Kern-Schale-Morphologie dadurch erreicht, daß eines der Monomere des Copolymers vorpolymerisiert wird und das weitere Monomer des Copolymers nach Beginn der Polymerisation des ersten Monomers, vorzugsweise nach Beendigung der Polymerisation des ersten Monomers, zu dem ersten Monomer gegeben und polymerisiert wird.

Bei den erfindungsgemäßen Blockcopolymeren handelt es sich um eine Polymerkette, die mindestens einen Block, d.h. mindestens zwei Monomereinheiten, des ersten Monomers und einen weiteren Block eines weiteren Monomers aufweist.

Bei den erfindungsgemäßen statistischen Copolymeren ist die Abfolge von dem ersten und von mindestens einem weiteren Monomer völlig willkürlich, so daß sich sowohl Blöcke als auch Einzelmonomer-Wiederholungseinheiten der eingesetzten Monomere in einer Kette abwechseln.

Weiterhin ist es in der erfindungsgemäßen Mischung bevorzugt, daß das dritte Copolymer B3 als Pfropfcopolymer vorliegt. Hierbei ist es wiederum bevorzugt, daß die eine Komponente B31 die Pfropfgrundlage, auch Kern genannt, bildet.

Erfindungsgemäß ist es besonders bevorzugt, wenn der Kern weich ist, d. h., vorzugsweise eine Glastemperatur im Bereich von -50 bis +20, bevorzugt -40 bis +10 und besonders bevorzugt -30 bis 0°C aufweist. Weiterhin ist es erfindungsgemäß bevorzugt, daß die Schale, auch Pfropfauflage genannt, eine Glastemperatur von größer 50, bevorzugt im Bereich von 50 bis 150 und besonders bevorzugt 50 bis 100°C aufweist.

Erfindungsgemäß ist es bevorzugt, daß die mittlere Teilchengröße der Pfropfgrundlage B31 in Bereiche von 0,04 bis 10 µm, bevorzugt im Bereich von 0,05 bis 2 µm und besonders bevorzugt im Bereich von 0,07 bis 1 µm liegt. Die Gesamtteilchengröße des Pfropfcopolymers B3 liegt vorzugsweise im Bereich von 0,05 bis 15 µm, bevorzugt im Bereich von 0,06 bis 5 µm und besonders bevorzugt im Bereich von 0,08 bis 1,2 µm.

Die von der weiteren Komponente B32 gebildete Pfropfauflage, bzw. Schale, des Pfropfcopolymers B3 weist vorzugsweise eine Dicke im Bereich von 1 bis 2000 nm und besonders bevorzugt von 5 bis 500 nm auf.

Als mittlere Teilchengröße bzw. Teilchengrößenverteilung werden die aus der integralen Massenverteilung bestimmten Größen angegeben. Bei den erfindungsgemäßen mittleren Teilchengrößen handelt es sich in allen Fällen um die Gewichtsmittel der Teilchengrößen, wie sie mittels einer analytischen Ultrazentrifuge entsprechend der Methode von W. Scholtan und H. Lange, Kolloid-Z. und Z.-Polymere 250 (1972), Seiten 782 - 796, bestimmt wurden. Die Ultrazentrifugenmessung liefen für die integrale Massenverteilung des Teilchendurchmessers eine Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen größeren Durchmesser als der $d_{50}$-Wert. Zur Charakterisierung der Breite der Teilchengrößenverteilung der Kautschukteilchen werden neben dem $d_{50}$-Wert (mittlerer Teilchendurchmesser) die sich aus der integralen Massenverteilung ergebenden $d_{10}$- und $d_{90}$-Werte herangezogen. Der $d_{10}$- bzw. $d_{90}$-Wert der integralen Massenverteilung sind dabei entsprechend dem $d_{50}$-Wert definiert mit dem Unterschied, daß sie auf 10 bzw. 90 Gew.-% der Teilchen bezogen sind. Der Quotient

$$(d_{90}-d_{10})/d_{50}=Q$$

stellt ein Maß für die Verteilungsbreite der Teilchengröße dar. Als Komponente B erfindungsgemäß verwendbare Emulsionspolymerisate B weisen vorzugsweise Q-Werte kleiner als 0,5, insbesondere kleiner als 0,35 auf.

Der durchschnittliche Durchmesser der Pfropfauflage B32 beträgt zwischen 2 und 800, bevorzugt 5 und 600, besonders bevorzugt 10 und 300 nm. Der Durchmesser kann beispielsweise anhand von mikroskopischen Aufnahmen der Pfropfcopolymere durch Ausmessen oder mittels einer Ultrazentrifuge bestimmt werden.

In einer anderen erfindungsgemäßen Ausführungsform weist das Pfropfcopolymer B3 mit der Pfropfauflage B32 eine Morphologie auf, die komplexer als die reine Kern-Schale-Morphologie ist. Beispielsweise kann die Pfropfauflage in Teilbereichen durch das Material der Pfropfgrundlage durchdrungen sein, so daß eine Morphologie entsteht, die

an das Aussehen einer Himbeere erinnert. Die komplexen Morphologien lassen sich durch mikroskopische Aufnahmen der Pfropfcopolymere zeigen.

Weiterhin ist es erfindungsgemäß bevorzugt, daß die Mischung 50 bis 95 Gew.-% des Bestandteils A und 5 bis 95 Gew.-% des Bestandteils B, jeweils bezogen auf die Mischung, enthält bzw. daraus erhältlich ist.

Darüber hinaus ist es erfindungsgemäß bevorzugt, daß der Bestandteil B 1 bis 98 Gew.-% des ersten Copolymers B1, 1 bis 98 Gew.-% des zweiten Copolymers B2 und 10 bis 98 Gew.-% des dritten Copolymers B3, jeweils bezogen auf den Bestandteil B, enthält bzw. daraus erhältlich ist.

Ferner ist erfindungsgemäß eine Mischung bevorzugt, wobei B1 30 bis 85 Gew.-% B11, 15 bis 50 Gew.-% B12 und 0 bis 55 Gew.-% mindestens eines weiteren Monomers B13, jeweils bezogen auf B1, enthält bzw. daraus erhältlich ist.

Zudem ist eine Mischung erfindungsgemaß bevorzugt, in der das zweite Copolymer B2 50 bis 95 Gew.-% B21, 5 bis 50 Gew.-% B22 und 0 bis 45 Gew.-% B23, jeweils bezogen auf das zweite Copolymer B2 enthält bzw. daraus erhältlich ist.

Weiterhin ist eine erfindungsgemäße Mischung bevorzugt, wobei B3 50 bis 95 Gew.-% B31 und 5 bis 50 Gew.-% B32, jeweils bezogen auf B3 enthält bzw. daraus erhältlich ist.

Die erste Komponente B31 des Copolymers B3 enthält vorzugsweise 70 bis 99,9 Gew.-% B311, 0,1 bis 10 Gew.-% B312 und 0 bis 29,9 Gew.-% B313 oder alternativ zu B311 bis B313 65 bis 100 Gew.-% B3111, 0 bis 5 Gew.-% B3112 und 0 bis 30 Gew.-% B3113, jeweils bezogen auf B31, oder ist daraus erhältlich.

In einer bevorzugten Ausführungsform der ersten Komponente B31 des Copolymers B3 sind 90 bis 95,5 Gew.-% B311, 0,5 bis 10 Gew.-% B312, 0 bis 9,5 Gew.-% B313, 75 bis 100 Gew.-% B3111, 0 bis 3 Gew.-% B3112 und 0 bis 22 Gew.-% B3113 enthalten.

Die erfindungsgemäßen Mischungen können vorzugsweise zusätzlich zu den Bestandteilen A und B Hilfs- und/oder Zusatzstoffe sowie Thermoplaste oder Duroplaste als Bestandteil B enthalten bzw. daraus erhältlich sein. Besonders bevorzugt sind erfindungsgemäße Mischungen, die 50 bis 100 Gew.-% der Bestandteile A und B und 0 bis 50 Gew.-% des Bestandteils C, jeweils bezogen auf die gesamte Mischung, enthalten. Als Hilfs- und/oder Zusatzstoffe bzw. thermoplastische oder duroplastische Polymere können beispielsweise Weichmacher, Antistatika, Lichtschutzmittel, Gleitmittel, Treibmittel, Haftvermittler, weitere verträgliche thermoplastische Kunststoffe, die sich vorzugsweise von den Polykondensaten des Bestandteils A unterscheiden, beispielsweise Polyester (z.B. Polyethylenterephthalat, Polybutylenterephthalat), Polycarbonat, Polyamid, Polyoxymethylen, Polystyrol, Polyethylen, Polypropylen, Polyvinylchlorid, Füllstoffe, oberflächenaktive Substanzen, Flammschutzmittel, Farbstoffe und Pigmente, Stabilisatoren gegen Oxidation, Hydrolyse, Licht, Hitze oder Verfärbung und/oder Verstärkungsmittel enthalten sein. Diese Hilfs- und/oder Zusatzstoffe können sowohl bereits bei der Herstellung der TPU eingesetzt werden, als auch der Komponente (A) und/oder (B) bei der Herstellung der Mischung zugesetzt werden.

Als Lichtschutzmittel können alle üblichen Lichtschutzmittel eingesetzt werden, beispielsweise Verbindungen auf Basis von Benzophenon, Benztriazol, Zimtsäure, organischen Phosphiten und Phosphoniten sowie sterisch gehinderte Amine.

Als Gleitmittel kommen beispielsweise Kohlenwasserstoffe wie Öle, Paraffine, Polyethylen-Wachse, Polypropylen-Wachse, Fettalkohole mit 6 bis 20 Kohlenstoffatomen, Ketone, Carbonsäuren wie Fettsäuren, Montansäure oder oxidiertes Polyethylen-Wachs, Carbonsäureamide sowie Carbonsäureester, z.B. mit den Alkoholen, Ethanol, Fettalkoholen, Glycerin, Ethandiol, Pentaerythrit und langkettigen Carbonsäuren als Säurekomponente in Betracht.

Als Stabilisatoren können übliche Antioxidantien, beispielsweise phenolische Antioxidantien, z.B. alkylierte Monophenole, Ester und/oder Amide der (3,5-ditertierbutyl-4-hydroxyphenyl-propionsäure und/oder Benztriazole eingesetzt werden. Beispielhaft sind mögliche Antioxidantien in EP-A 698637 und EP-A 669367 erwähnt. Konkret kann man als phenolische Antioxidantien 2,6-Ditertierbutyl-4-methylphenol, Pentaerythrityl-tetrakis-[3-(3,5-ditertiärbutyl-4-hydroxyphenyl)-propionat und N,N'-Di-(3,5-ditertiärbutyl-4-hydroxyphenyl-propionyl)-hexamethylendiamin erwähnen. Die genannten Stabilisatoren können einzeln oder in Gemischen aus mindestens zwei davon verwendet werden.

Das erfindungsgemäße erste Copolymer B1 kann nach allgemein bekannten Verfahren, wie sie insbesondere in DE 31 49 358 A1 auf Seite 9, Zeilen 18 bis 32 und in DE 32 27 555 A1 auf Seite 9, Zeilen 18 bis 32 beschrieben sind, durchgeführt werden. Insbesondere sind in diesem Zusammenhang Copolymerisationen der Monomeren B11, B12 und gegebenenfalls B13 in Masse, Lösung, Suspension oder wäßriger Emulsion, vorzugsweise in Lösung in einem Temperaturbereich von 0 bis 150, bevorzugt 10 bis 50 und besonders bevorzugt 15 bis 60 °C unter Normaldruck oder leicht erhöhten Drücken bevorzugt. Weitere geeignete Verfahren sind in „Kunststoff-Handbuch", Vieweg-Daumiller, Band V (Polystyrol), Carl-Hanser-Verlag, München, 1969, S. 124, Z. 12 ff. beschrieben.

Die erfindungsgemäß bevorzugte Lösungspolymerisation wird vorzugsweise in einem Lösungsmittel durchgeführt, daß 1 bis 70, bevorzugt 2 bis 50 und besonders bevorzugt 5 bis 25 Gew.-% eines aromatischen, vorzugsweise alkylaromatischen Lösungsmittels beinhaltet. Als alkylaromatische Lösungsmittel kommen insbesondere Xylol, Toluol, Ethylbenzol und besonders bevorzugt Ethylbenzol in Betracht.

Das zweite Copolymer B2 kann vorzugsweise nach den gleichen Verfahren hergestellt werden, die für das

erste Copolymer B1 vorgestellt wurden. Die Herstellung des dritten Copolymers B3 ist allgemein aus der Fachliteratur bekannt. Insbesondere wird in diesem Zusammenhang auf DE 12 60 135 A1, Seiten 3 bis 4, Zeilen 13 bis 23 und US 3 055 859, Seiten 2 bis 4, Zeilen 62 bis 10 sowie für die Pfropfung der zweiten Stufe auf DE 31 49 358 A1, Seiten 6 bis 8, Zeilen 16 bis 5 und DE 32 27 555 A1, Seiten 6 bis 8, Zeilen 16 bis 5 verwiesen.

Dabei hat es sich als vorteilhaft erwiesen, B31 durch eine Emulsionspolymerisation herzustellen. Hierbei wurde vorzugsweise in wäßriger Emulsion bei Temperaturen im Bereich von 20 bis 100, bevorzugt 50 bis 80 C polymerisiert. Auf den so erhaltenen Latex wurden dann die Monomere B321, B322 und gegebenenfalls B323 aufpolymerisiert. Hierbei hat sich die Emulsionspolymerisation als Polymerisationsart bewährt. Bei der Herstellung der Bestandteile und insbesondere der Copolymere können die üblichen Hilfs- und/oder Zusatzstoffe Verwendung finden, beispielsweise Emulgatoren, wie Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Hartseifen, Polymerisationsinitiatoren, wie übliche Persulfate, beispielsweise Kaliumpersulfat oder Redoxinitiatoren, Polymerisationshilfsstoffe, wie übliche Puffersubstanzen, durch welche pH-Werte vorzugsweise im Bereich von 6 bis 9 eingestellt werden können, beispielsweise Natriumbicarbonat und/oder Natriumpyrophosphat, sowie gegebenenfalls Molekulargewichtsregler, beispielsweise Mercaptane, Terpinole oder dimeres α-Methylstyrol, wobei die Molekulargewichtsregler üblicherweise in Mengen von 0 bis 3, bevorzugt 0,01 bis 2 und besonders bevorzugt 0,2 bis 1, bezogen auf das Gewicht der Reaktionsmischung eingesetzt werden.

Die in den erfindungsgemäßen Mischungen enthaltenen Copolymere B1, B2 und B3 können vor der Mischung mit dem Bestandteil A intensiv vermischt werden. Bevorzugt werden die Copolymere in dafür geeigneten Aggregaten, wie Extruder, Kneter, Spritzgußmaschinen, Pressen, Kalander etc., bei erhöhten Temperaturen, bevorzugt im Bereich von 170 bis 250, und bevorzugt 180 bis 230 °C, gemischt. Vorzugsweise werden die Bestandteile vor der Verarbeitung von bei den vorgenannten Temperaturen gasförmig vorliegenden Bestandteilen durch Trocknen getrennt.

In einer besonders bevorzugten Ausführungsform des Verfahrens werden die Copolymere B1 und B2 oder B2 und B3 oder B3 und B1 oder B1, B2 und B3 separat vorgemischt und das so erhaltene Blend anschließend mit dem Bestandteil A unter den oben genannten Bedingungen gemischt.

Bei der Mischung der Bestandteile A, B und gegebenenfalls C liegen diese bevorzugt in einem fließfähigen, erweichten oder geschmolzenen Zustand vor. Das möglichst homogene Vermischen der Komponenten erfolgt vorzugsweise bei Temperaturen, die über den Schmelztemperaturen der Bestandteile liegen. Üblicherweise liegt die Temperatur, bei der die Vermischung der Bestandteile erfolgt, im Bereich von 160 bis 250, vorzugsweise 190 bis 240 und besonders bevorzugt 200 bis 235 °C. Das Vermischen der Bestandteile zu einem möglichst homogenen Produkt kann mit üblichen Vorrichtungen, die Einrichtungen zum Heizen, Rühren, Kneten oder Walzen aufweisen, kontinuierlich oder diskontinuierlich, vorzugsweise mit Entgasung durchgeführt werden. Bevorzugt erfolgt das Vermischen der Bestandteile in einem Extruder, wobei die Bestandteile gemischt oder einzeln, beispielsweise vollständig über den Trichter, in den Extruder eingeführt oder auch anteilig an späterer Stelle des Extruders zu dem geschmolzenen oder festen, bereits im Extruder befindlichen Bestandteilen zugeführt werden können.

Die schmelzgemischten Bestandteile werden anschließend abgekühlt und gleichzeitig oder auch nach der zumindest teilweise erfolgten Abkühlung zerkleinert und insbesondere granuliert. Die so erhaltenen Produkte dienen der weiteren Verarbeitung durch Spritzguß, Extrusion, Kalandrierung, Pressen, Blasen etc.

Zudem betrifft die Erfindung ein Verfahren zur Herstellung einer erfindungsgemäßen Mischung, wobei zu dem Bestandteil A oder zumindest zu einem das Polykondensat oder Polyadditionsprodukt A bildenden Polykondensatedukt oder Polyadditionsedukt mindestens einer der zuvor beschriebenen Bestandteile gegeben wird.

Erfindungsgemäß können Gebilde, insbesondere Kabelummantelungen, Folien, Schläuche, Fasern, Profile, Schuhschalen, Schuhsohlen, technische Formteile, Gebrauchsartikel, Formkörper aller Art, Beschichtungen, Faltenbälge, Tierohrmarken oder Blasformkörper oder mindestens zwei davon durch Extrusion, Spritzguß oder Kalandrierung von erfindungsgemäßen Mischungen hergestellt werden.

Weiterhin können die vorgenannten Gebilde die erfindungsgemäßen Mischungen beinhalten.

Zudem können die erfindungsgemäßen Mischungen zur Herstellung der Gebilde verwendet werden.

Die Erfindung wird nun anhand nicht einschränkender Beispiele verdeutlicht.

**Beispiele:**

Komponente A: Elastollan 1185 A, Elastogran GmbH (TPU basierend auf MDI, Butandiol und Polytetrahydrofuran, Shore A Härte 85);

Komponente B1: Copolymer hergestellt mit 70 Gew.-% α-Methylstyrol als B21 und 30 Gew.-% Acrylnitril als B22; 15 Gew.-% (bezogen auf 100 Gew.-% Monomer) an Ethylbenzol, 0,1 Gew.-% Azo-bis-isobutyronitril als Starter.

Viskositätszahl (gemessen in 0,5 %iger Toluol-Lösung bei Raumtemperatur): 57 ml/g

Komponente B2: Copolymer hergestellt mit 67 Gew.-% Styrol als B31 und 33 Gew.-% Acrylnitril als B32, 15 Gew.-% an Ethylbenzol VZ; Viskositätszahl (gemessen in 0,5 %iger Toluol-Lösung bei Raumtemperatur): 60 ml/g

Komponente B3: Pfropfkautschuk, hergestellt gemäß DE 31 35 251 A1, Seite 12, Zeile 21 (Pfropfkautschuk B). Die Komponente B31 wurde bei T = 70 °C mit einem Feststoffgehalt von 40 % hergestellt. Teilchengröße $d_{50}$ = 85 nm. Die Komponente B32 wurde mit Styrol/Arylnitril 75/25 (Gew.-%) bei einem Feststoffgehalt von 40 % und T = 70 °C hergestellt. Teilchengröße $d_{50}$ = 95.

Die Komponenten B1, B2 wurden hergestellt nach einem Lösungspolymerisationsverfahren, wie es beispielhaft beschrieben ist in: Kunststoff-Handbuch, Hrsg. Vieweg-Daumiller, Band V (Polystyrol), Carl-Hanser-Verlag, München, 1969, Seite 124, Zeile 12 ff..
Jede der Komponenten B2, B3 wurde in getrennten Versuchen mit der Komponente B1 in einem Gewichtsverhältnis von 40:60 in einem Extruder (ZSK 30 Doppelschneckenextruder der Fa. Werner & Pfleiderer) bei einer Temperatur von 230°C innig vermischt.
Diese Mischungen wurden wiederum in einem Extruder (ZSK 30 Doppelschneckenextruder der Fa. Werner & Pfleiderer) mit Komponente A bei einer Temperatur von 230°C innig vermischt.
Die erfindungsgemäße Mischung des Beispiels 1 enthaltend den erfindungsgemäß definiert niedrigen Gehalt an Acrylnitril sowohl in der Komponente B1 als auch B2 weist im Vergleich mit den Vergleichsprodukten folgende besonders vorteilhafte Eigenschaften auf:

| Beispiel | 1 | 2 | 3 | 1V | 2V | 3V |
|---|---|---|---|---|---|---|
| Komponente A [Gew.-%] | 90 | 70 | 50 | 90 | 70 | 50 |
| Komponente B1 [Gew.-%] | 4 | 12 | 20 | - | - | - |
| Komponente B2[Gew.-%] | 2 | 6 | 10 | 6 | 18 | 30 |
| Komponente B3 [Gew.-%] | 4 | 12 | 20 | 4 | 8 | 12 |
| Farbe | Gelb | Gelb | Gelb | Gelb | Gelb | Gelb |
| MVI [220°C/5kg][ml/10min] | 77 | 44 | 19 | 81 | 44 | 17 |
| Kerbschlagzähigkeit | k.B. | k.B. | 27 | k.B. | k.B. | 8 |
| Durchstoßversuch, -30°C, [Nm] | 43 | 46 | 38 | 39 | 19 | 10 |
| MVI: Bei 220°C und 5 kg, gemessen nach ISO 1133<br>Charpy-Kerbschlagzähigkeit: gemessen nach ISO 179 1eA bei -30 °C(„k.B." heißt: kein Bruch)<br>Durchstoßversuch: gemessen nach DIN 53443 | | | | | | |

Die Aufgabe der vorliegenden Erfindung, die mechanischen Eigenschaften von Mischungen enthaltend TPUs und ABS- bzw. ASA-Werkstoffe, insbesondere ihre Zähigkeit und Verträglichkeit deutlich zu verbessern, konnte, wie anhand der Meßergebnisse ersichtlich, gelöst werden. Die erfindungsgemäße Mischung der Beispiele 1-3 zeigen im Vergleich mit den Mischungen der Beispiele V1-3, zu deren Herstellung keine $\alpha$-Methylstyrol-haltigen Copolymere verwendet wurden, erheblich verbesserte Eigenschaften. So konnten erfindungsgemäß die Kerbschlagzähigkeit und die Durchstoßfestigkeit deutlich verbessert werden.

## Patentansprüche

**1.** Mischung, mindestens enthaltend als Bestandteile

A ein Polykondensat oder ein Polyadditionsprodukt, vorzugsweise ein Polyurethan,
B mindestens ein erstes Copolymer

B1, erhältlich aus mindestens

B11 einem substituierten vinylaromatischen Monomer,
B12 einem Acrylmonomer,

und ein zweites Copolymer

B2, erhältlich aus mindestens

B21 einem vinylaromatischen Monomer,
B22 einem Acrylmonomer,

wobei erstes und zweites Copolymer verschieden voneinander sind.

**2.** Mischung, wobei der Bestandteil B mindestens ein drittes Copolymer B3, erhältlich aus mindestens

B31 als eine Komponente, mindestens enthaltend

B311 ein Acrylat,
B312 einen Vernetzer
oder

B3111 ein Dien,
B3112 gegebenenfalls einen Vernetzer,
und

B32 als eine weitere Komponente, mindestens enthaltend

B321 ein vinylaromatisches Monomer,
B322 ein Acrylmonomer,

umfaßt.

**3.** Mischung nach einem der Ansprüche 1 oder 2, wobei das Copolymer B1 oder B2 oder beide Copolymere keine Pfropfcopolymere sind.

**4.** Mischung nach einem der Ansprüche 1 bis 3, wobei die Mischung 5 bis 95 Gew.-% des Bestandteils A und 5 bis 95 Gew.-% des Bestandteils B, jeweils bezogen auf die Mischung, enthält.

**5.** Mischung nach einem der Ansprüche 1 bis 4, wobei der Bestandteil B 1 bis 89 Gew.-% des ersten Copolymers B1, 1 bis 89 Gew.-% des zweiten Copolymers B2 und 10 bis 98 Gew.-% des dritten Copolymers B3, jeweils bezogen auf den Bestandteil B, enthält.

**6.** Mischung nach einem der Ansprüche 1 bis 5, wobei B1 aus 30 bis 85 Gew.-% B11, 15 bis 50 Gew.-% B12 und 0 bis 55 Gew.-% mindestens eines weiteren Comonomers B13, jeweils bezogen auf B1, erhältlich ist.

**7.** Mischung nach einem der Ansprüche 1 bis 6, wobei B2 aus 50 bis 95 Gew.-% B21, 5 bis 50 Gew.-% B22 und 0 bis 45 Gew.-% mindestens eines weiteren Comonomers B23, jeweils bezogen auf B2, erhältlich ist.

**8.** Mischung nach einem der Ansprüche 1 bis 7, wobei B3 aus 50 bis 95 Gew.-% B31 und 5 bis 50 Gew.-% B32, jeweils bezogen auf B3, erhältlich ist.

**9.** Mischung nach einem der Ansprüche 1 bis 8, enthaltend einen weiteren Bestandteil C, ausgewählt aus der Gruppe Thermoplaste, Duroplaste und Füllstoffe.

**10.** Verfahren zur Herstellung einer der in einem der Ansprüche 1 bis 9 definierten Mischung, wobei zu dem Bestandteil A oder zumindest zu einem das Polykondensat oder Polyadditionsprodukt A bildenden Polykondensatedukt oder Polyadditionsedukt mindestens einer der in einem der Ansprüche 1 bis 9 definierten Bestandteile gegeben wird.

**11.** Mischung erhältlich, wobei zu dem Bestandteil A oder zu mindestens einem das Polykondensat oder Polyadditionsprodukt A bildenden Polykondensatedukt oder Polyadditionsedukt mindestens einer der in einem der Ansprüche 1 bis 9 definierten Bestandteile B gegeben wird.

**12.** Verfahren zur Herstellung von Gebilden, insbesondere Kabelummantelungen, Folien, Schläuchen, Fasern, Profilen, Schuhschalen, Schuhsohlen, technischen Formteilen, Gebrauchsartikeln, Formkörpern, Beschichtungen, Faltenbälgen, Tierohrmarken oder Blasformkörpern durch Extrusion, Spritzguß oder Kalandrieren von Mischungen gemäß einem der Ansprüche 1 bis 9 und 11.

**13.** Gebilde, enthaltend Mischungen gemäß einem der Ansprüche 1 bis 9 und 11.

**14.** Verwendung von Mischungen gemäß einem der Ansprüche 1 bis 9 und 11 zur Herstellung von Gebilden.

Europäisches Patentamt

# EUROPÄISCHER RECHERCHENBERICHT

Nummer der Anmeldung
EP 00 10 9075

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 449 796 A (MONSANTO CO)<br>2. Oktober 1991 (1991-10-02)<br>* Seite 3, Zeile 15 - Zeile 20; Ansprüche 1,7,8; Tabelle 1 *<br>--- | 1,3,4, 9-14 | C08L75/04 |
| A | DE 24 05 934 A (BAYER AG)<br>28. August 1975 (1975-08-28)<br>* Seite 13, Absatz 3; Ansprüche 1-4,7 *<br>----- | 1-4,6, 9-12 | |

RECHERCHIERTE SACHGEBIETE (Int.Cl.7)
C08L

Der vorliegende Recherchenbericht wurde für alle Patentansprüche erstellt

| Recherchenort | Abschlußdatum der Recherche | Prüfer |
|---|---|---|
| BERLIN | 15. August 2000 | Angiolini, D |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 00 10 9075

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-08-2000

| Im Recherchenbericht angeführtes Patentdokument | Datum der Veröffentlichung | Mitglied(er) der Patentfamilie | Datum der Veröffentlichung |
|---|---|---|---|
| EP 0449796 A | 02-10-1991 | CA 2039092 A | 28-09-1991 |
| DE 2405934 A | 28-08-1975 | KEINE | |

EPO FORM P0461

Für nähere Einzelheiten zu diesem Anhang : siehe Amtsblatt des Europäischen Patentamts, Nr.12/82